# EUROPÄISCHE PATENTSCHRIFT

(11) **EP 4 137 360 B1**
(45) Veröffentlichungstag und Bekanntmachung des Hinweises auf die Patenterteilung: **30.10.2024**
(21) Anmeldenummer: 21191929.5
(22) Anmeldetag: 18.08.2021
(51) Int. Cl.: B60P 1/43, B60P 3/07, B61D 3/18, B61D 47/00, B60P 3/08, B62D 21/09

(54) **AUTOTRANSPORTER**
CAR TRANSPORTER
REMORQUE PORTE-VOITURE

(43) Veröffentlichungstag der Anmeldung: 22.02.2023
(73) Patentinhaber: Kässbohrer Transport Technik GmbH, 5301 Eugendorf (AT)
(72) Erfinder: EBERHARTINGER, Alexander, 5300 Hallwang (AT); FÖSSL, Horst, 5061 Elsbethen (AT)
(74) Vertreter: Torggler & Hofmann Patentanwälte - Innsbruck

(56) Entgegenhaltungen:
- EP-A1- 1 813 497
- DE-C- 866 913
- US-A- 3 119 506
- US-A- 4 789 281

## Beschreibung

Die Erfindung betrifft einen Autotransporter zum Transport von Fahrzeugen mit den Merkmalen des Oberbegriffs des Anspruchs 1, ein Verfahren zum Verladen eines Autotransporters und eine Anordnung aus einem Autotransporter zum Transport von Fahrzeugen und einem Schienenfahrzeug, insbesondere einem Taschenwagen mit einer Tasche.

Im Stand der Technik bekannte Autotransporter oder Fahrzeugtransporter weisen gewöhnlich ein Fahrwerk mit zumindest einer Achse mit Rädern zum Befahren einer Fahrbahn und eine Ladefläche zum Beladen mit Ladegut in Form zumindest eines Fahrzeugs auf. Insbesondere für Autotransporter, welche zum Beladen mit mehreren Fahrzeugen wie etwa Personenkraftwagen ausgelegt sind, sind für den Transport auf öffentlichen Straßen Beschränkungen der maximal zulässigen Höhe und Länge zu beachten. Solche Beschränkungen können für die Grundlänge des unbeladenen Autotransporters gelten, als auch für eine Länge eines beladenen Autotransporters. Es ist bekannt, zumindest einen Teil der Ladefläche an einem heckseitigen Ende des Autotransporters anzuordnen. Die Ladefläche kann sich dabei in einer Längsrichtung des Autotransporters gesehen heckseitig hinter die Achse des Autotransporters hinaus erstrecken, wobei dieser Teil der Ladefläche auch bewegbar ausgeführt sein kann, insbesondere in Form einer bewegbaren Auf- und Abfahrrampe. In einem beladenen Zustand einer solchen Ladefläche eines Autotransporters kann gegebenenfalls ein Ladeüberhang bestehen, bei welchem ein Teil der Ladung über die Grundlänge des beladenen Autotransporters hinaus stehen kann.

Ist für das Ladegut ein kombinierter Verkehr auf der Straße und der Schiene vorgesehen, wird er Autotransporter gewöhnlich auf ein geeignetes Schienenfahrzeug, beispielsweise in Form eines Eisenbahnflachwagens, insbesondere in Form eines Niederflurwagens, aufgefahren. Für einen solchen begleitenden kombinierten Verkehr müssen die Autotransporter, die oftmals als Sattelanhänger ausgebildet sind, gemeinsam mit Zugmaschinen unter großem zeitlichen Aufwand seriell auf die Schienenfahrzeuge aufgefahren und abgestellt werden. Neben dem hohen Zeitaufwand zum Be- und Entladen ergibt sich für eine solche Beladung auch ein hoch gelegener Schwerpunkt, der sich negativ auf das Fahrverhalten des beladenen Schienenfahrzeugs auswirken kann. Darüber hinaus sind auch für den Transport auf der Schiene geltende Beschränkungen der maximal zulässigen Länge und insbesondere Höhe zu beachten. Alternativ können die auf dem Autotransporter geladenen Fahrzeuge individuell auf einen geeigneten Eisenbahnwagon geladen werden, was auch mit hohem Zeitaufwand verbunden ist, da dabei die Fahrzeuge vom Autotransporter abgefahren und auf spezielle Eisenbahnwagons aufgefahren werden müssen.

Aus der US 4,789,281 A ist ein Fahrzeugtransporter mit einer befahrbaren Heckklappe bekannt.

Aus der US 3,119,506 A ist eine Hubvorrichtung zum Beladen eines Flachwagens mit einem Fahrzeugtransporter bekannt.

Aus der DE 866913 C ist ein Fahrzeugtransporter mit einer versetzbaren Ladefläche bekannt.

Aus der EP 1 813 497 A1 ist ein kranbarer Sattelauflieger bekannt.

Aufgabe der Erfindung ist die Bereitstellung eines Autotransporters zum Transport von Fahrzeugen, eines Verfahrens zum Verladen eines Autotransporters und einer Anordnung aus einem Autotransporter und einem Schienenfahrzeug, bei welchen die oben diskutierten Nachteile nicht auftreten.

Diese Aufgabe wird durch einen Autotransporter zum Transport von Fahrzeugen gemäß dem Anspruch 1, ein Verfahrens zum Verladen eines solchen Autotransporters und eine Anordnung aus einem solchen Autotransporter und einem Schienenfahrzeug gelöst.

Vorteilhafte Ausführungsformen der Erfindung sind in den abhängigen Ansprüchen definiert.

Ein Autotransporter ist grundsätzlich zum Transport von Ladegut in Form von Fahrzeugen, insbesondere Personenkraftwagen, geeignet.

Der Autotransporter weist ein Fahrwerk mit zumindest einer Achse mit Rädern zum unmittelbaren Befahren einer Fahrbahn auf. Mehrachsige Ausführungen sind möglich.

Der Autotransporter weist zumindest eine Ladefläche zum Beladen mit Ladegut in Form von zumindest einem Fahrzeug auf. Die Ladefläche weist dazu zumindest abschnittsweise eine Abstützung oder Abstützungen für Räder zumindest einer Achse eines zu ladenden Fahrzeugs auf.

Der Autotransporter kann einstöckig oder mehrstöckig ausgebildet sein, wobei Ladeflächen mit unterschiedlichem Höhenversatz vorgesehen sein können.

Die zumindest eine Ladefläche weist an einem heckseitigen Ende des Autotransporters eine Abstützung auf, die relativ zu einem Rahmen des Autotransporters zwischen zumindest einer ersten und einer zweiten Position bewegbar ist. Die unterschiedlichen Positionen dieser Abstützung können sich auf einen Längsversatz und/oder einen Höhenversatz relativ zum Rahmen beziehen.

Insbesondere kann die am heckseitigen Ende angeordnete Abstützung zwischen zumindest einer ersten und einer zweiten Position anhebbar sein. Die zumindest zwei unterschiedlichen Positionen können sich hinsichtlich des heckseitig unterhalb der Abstützung nutzbaren Raums unterscheiden.

Vorteilhaft kann sich die Abstützung in der ersten Position zum Beladen der Abstützung eignen. Insbesondere kann die Abstützung in der ersten Position relativ zum Rahmen abgesenkt sein und gegebenenfalls die Ladefläche als Auffahrrampe zum direkten Auffahren von Fahrzeugen verlängern.

Die Abstützung kann in der zweiten Position relativ zum Rahmen angehoben sein und heckseitig unterhalb der Abstützung einen vergrößerten nutzbaren Raum aufweisen. Dadurch kann beispielsweise mehr Bodenfreiheit unterhalb der Abstützung geschaffen werden.

Ein heckseitiges Ende der Abstützung ist in einer Längsrichtung des Autotransporters in zumindest einer der zumindest zwei Positionen hinter der Achse angeordnet. Ein heckseitiges Ende der Abstützung kann in einer Längsrichtung des Autotransporters in zumindest einer der zumindest zwei Positionen den - auf die Grundlänge des Autotransporters bezogen - hintersten Punkt ausbilden. Ein auf dieser Abstützung des Autotransporters geladenes Ladegut kann gegebenenfalls über die Grundlänge des beladenen Autotransporters hinaus stehen. Für einen solchen Ladeüberhang kann ein Teil des Ladeguts - auf die Gesamtlänge des Autotransporters bezogen - den hintersten Punkt eines beladenen Autotransporters ausbilden.

Eine maximal zulässige Grundlänge für einen Autotransporter kann beispielsweise bis zu 16,5 Meter ohne Ladung betragen. Mit einem Ladeüberhang von bis zu 1,5 Metern kann eine maximal zulässige Gesamtlänge eines beladenen Autotransporters beispielsweise bis zu 18 Meter betragen.

Bei einer mehrstöckigen Ausführung des Autotransporters kann die untere Ladefläche die Abstützung aufweisen.

Der Autotransporter kann grundsätzlich als ein Anhänger, der durch eine Zugmaschine bewegbar ist, ausgebildet sein. Insbesondere kann der Autotransporter einen Königszapfen aufweisen und als Sattelauflieger ausgebildet sein.

Zum Verladen des Autotransporters auf ein Schienenfahrzeug weist der Autotransporter Greifkanten für eine Hubvorrichtung auf.

Beim Beladen eines Schienenfahrzeuges mit Ladegut durch eine Hubvorrichtung kann grundsätzlich zwischen Ladegütern in Form von unmittelbar kranbarem Ladegut und nicht unmittelbar kranbarem Ladegut unterschieden werden.

Unmittelbar kranbares Ladegut bezieht sich auf ein Ladegut, welches selbst Greifkanten für eine Hubvorrichtung aufweist, also im Wesentlichen ohne weitere Hilfsmittel von einer Hubvorrichtung verladen werden kann.

Nicht unmittelbar kranbares Ladegut bezieht sich auf ein Ladegut, welches selbst keinerlei Greifkanten für eine Hubvorrichtung aufweist. Solches Ladegut kann gegebenenfalls durch Hilfsmittel kranbar gemacht werden. Dies ist jedoch nachteilig mit zusätzlichem Zeitaufwand und zusätzlichem logistischen Aufwand und zusätzlichem Gewicht der Hilfsmittel, die gewöhnlich mit dem Ladegut gemeinsam verladen werden und bei diesem während des Transports verbleiben, verbunden.

Dadurch, dass der Autotransporter Greifkanten für eine Hubvorrichtung aufweist, kann dieser unmittelbar von einer Hubvorrichtung auf ein Schienenfahrzeug verladen werden, wodurch sich die Nachteile eines nicht unmittelbar kranbaren Autotransporters vermeiden lassen.

Bei der Hubvorrichtung kann es sich um einen Verladekran handeln, der auf die Höhe der Greifkanten abgesenkt wird und der mit Greifern in am Autotransporter angeordneten Greifkanten eingreift, um den Autotransporter anzuheben.

Die Greifkanten können grundsätzlich bügelförmig ausgebildet und auf dem Rahmen angeordnet sein, und/oder als Ausnehmungen im Rahmen ausgebildet sein.

Erfindungsgemäß weist der Autotransporter zumindest ein Paar an Greifkanten für die Hubvorrichtung auf, wobei die Greifkanten am Rahmen des Autotransporters angeordnet sind. Die Greifkanten können auf gegenüberliegenden Seiten von Längsträgern des Rahmens angeordnet sein. Die Greifkanten können zumindest abschnittsweise oberhalb eines Niveaus einer Ladefläche des Autotransporters angeordnet sein.

Besonders vorteilhaft kann der Autotransporter zumindest zwei Paare an Greifkanten für die Hubvorrichtung aufweisen, wobei zumindest zwei der Paare an Greifkanten in einer Längsrichtung des Autotransporters gesehen im Wesentlichen zentral um die Mitte der Grundlänge des Autotransporters am Rahmen des Autotransporters angeordnet sind. Der Schwerpunkt eines unbeladenen sowie eines gleichmäßig beladenen Autotransporters kann im Wesentlichen mittig zur Grundlänge des Autotransporters gelegen sein. Bei Anordnung der Greifkanten am Rahmen im Wesentlichen zentral um die Mitte der Grundlänge des Autotransporters kann ein Angreifen einer Hubvorrichtung an den Greifkanten mit minimaler Momentenbelastung der Hubvorrichtung erfolgen.

In einer vorteilhaften Ausführung kann die Abstützung relativ zum Rahmen des Autotransporters zwischen zumindest einer ersten und einer zweiten Position verschwenkbar und/oder in einer Höhenposition versetzbar sein. Ein Verschwenken und/oder Versetzten kann allgemein durch einen Antrieb, insbesondere einen Hydraulikzylinder, erfolgen.

Bei einer verschwenkbaren Ausführung der Abstützung kann die Abstützung um eine horizontale und quer zu einer Längserstreckung des Autotransporters verlaufende Schwenkachse schwenkbar am Rahmen gelagert sein. Die Abstützung kann insbesondere an zumindest einem schwenkbar am Rahmen gelagerten Schwenkarm gelagert sein. Vorzugsweise kann der Schwenkarm längenveränderbar ausgebildet sein.

Bei einer in einer Höhenposition versetzbaren Ausführung der Abstützung kann die Abstützung in einer Führung am Rahmen gelagert sein.

Auf der Abstützung können allgemein Räder zumindest einer Achse eines geladenen Fahrzeugs abstellbar sein. Dabei sind Ausführungen der Abstützung durch ein Lochblech oder eine Radbrille, welche einen rahmenförmigen Aufbau zur teilweisen Aufnahme eines Rads aufweisen kann, möglich.

In einer vorteilhaften Ausführung kann die Abstützung längenveränderbar ausgebildet sein. Dazu kann die Abstützung zumindest einen ausklappbaren und/oder ausfahrbaren Teilbereich aufweisen, wodurch die Verlängerung der Abstützung ausklappbar oder teleskopierbar sein kann.

Eine Position der Abstützung relativ zum Rahmen kann beispielsweise durch einen schwenkbaren und längenveränderbaren Stützarm zur Lagerung der Abstützung einstellbar sein. Auch dadurch kann eine längenveränderbare Abstützung ausgebildet sein. Eine Änderung der Länge des Stützarms kann händisch oder durch einen Antrieb erfolgen.

Schutz wird auch begehrt für ein Verfahren zum Verladen eines wie zuvor beschriebenen Autotransporters auf ein Schienenfahrzeug. Bei dem Schienenfahrzeug kann es sich um einen Flachwagen oder insbesondere um einen Taschenwagen handeln.

Im Stand der Technik bekannte Taschenwagen weisen eine Tasche für den Transport von mittelbar oder unmittelbar kranbarem Ladegut auf.

Gattungsgemäße Taschenwagen können eine Tasche mit einer Längserstreckung von etwa 11 Metern aufweisen, in welche Ladegut mit bis zu 44,5 Tonnen Gewicht geladen werden kann. Um die Ladehöhe von in der Tasche geladenem Ladegut gering zu halten, wird das Ladegut gewöhnlich zumindest teilweise in der Tasche angeordnet.

Das Schienenfahrzeug in Form eines Taschenwagens kann einen Rahmen mit zwei jeweils stirnseitig angeordneten Drehgestellen und zwei Langträgern, welche die Drehgestelle miteinander verbinden, aufweisen. Zwischen den Drehgestellen und den Langträgern kann eine abgesenkte Ladefläche angeordnet sein, wobei die Tasche von dem Rahmen und der Ladefläche ausgebildet wird.

Das Verfahren kann zumindest die folgenden Verfahrensschritte umfassen:
Zunächst kann ein Autotransporter auf einer Fahrbahn durch unmittelbares Befahren mittels eines Fahrwerks des Autotransporters bereitgestellt werden.

Vor dem Anheben und Verbringen kann der Autotransporter von der Zugmaschine abgekoppelt werden.

Nach dem Abkoppeln des Autotransporters von der Zugmaschine kann der Autotransporter auf der Fahrbahn abgestützt werden, beispielsweise durch längenveränderbare Stützbeine.

Soll ein beladener Autotransporter verladen werden, kann ein Beladen einer Ladefläche des Autotransporters mit zumindest einem Fahrzeug erfolgen. Dies kann vorzugsweise durch unmittelbares Auffahren erfolgen. Zumindest eine Achse eines Fahrzeugs kann auf einer an einem heckseitigen Ende des Autotransporters angeordneten, relativ zu einem Rahmen des Autotransporters zwischen zumindest einer ersten und einer zweiten Position bewegbaren, insbesondere angebbaren, Abstützung abgestellt werden. Dabei kann wie erwähnt eine zulässige Grundlänge für der Autotransporter durch einen Ladeüberhang überschritten werden. Beim Beladen kann sich die Abstützung in der dafür geeigneten ersten Position befinden.

Vor, während oder nach dem Anheben und Verbringen des Autotransporters durch eine Hubvorrichtung kann ein Bewegen, insbesondere Anheben, der an einem heckseitigen Ende des Autotransporters angeordneten Abstützung von der ersten in die zweite Position erfolgen. Die zweite Position der Abstützung kann sich zum Transport auf dem Schienenfahrzeug eignen. Insbesondere kann die Abstützung in der zweiten Position relativ zum Rahmen angehoben sein und heckseitig unterhalb der Abstützung einen vergrößerten nutzbaren Raum aufweisen, wodurch beim Verladen eine Kollision mit auf dem Schienenfahrzeug vorhandenen Störkonturen vermeidbar ist.

Ein Anheben des gegebenenfalls beladenen Autotransporters kann in einem weiteren Arbeitsschritt unmittelbar mit einer Hubvorrichtung erfolgen, wobei die Hubvorrichtung für den Hebevorgang in oder an den Greifkanten des Autotransporters angreift. Der Autotransporter kann mit der Hubvorrichtung über das Schienenfahrzeug verbracht werden.

In einem weiteren Verfahrensschritt kann ein Absetzen des Autotransporters auf das Schienenfahrzeug erfolgen. Wenn dies nicht vor dem Anheben oder dem Absetzten erfolgt ist, kann ein Bewegen der Abstützung von der ersten in die zweite Position durch ein Absetzten des Autotransporters auf das Schienenfahrzeug erfolgen.

Bei einer Ausbildung des Schienenfahrzeugs als Taschenwagen kann beim Absetzen des Autotransporters ein zumindest teilweises Einsetzen des Autotransporters in eine Tasche des Taschenwagens erfolgen. Dabei kann der Autotransporter mit zumindest einem Teil der Ladefläche innerhalb einer Längserstreckung in der Taschen angeordnet werden. Ein Teil der Ladefläche, insbesondere zumindest ein Teil der Abstützung, kann durch den in der zweiten Position der Abstützung vergrößerten nutzbaren Raum unterhalb der Abstützung außerhalb der Tasche anordenbar sein und über die Tasche hinaus stehen. Dadurch kann sich auf dem Autotransporter geladenes Ladegut in Längserstreckung der Tasche teilweise außerhalb der Tasche anordnen lassen.

In umgekehrter Reihenfolge der Verfahrensschritte kann ein Entladen des Schienenfahrzeugs erfolgen.

Weiter wird Schutz begehrt für eine Anordnung aus einem wie zuvor beschriebenen Autotransporter zum Transport von Fahrzeugen und einem Schienenfahrzeug, insbesondere einem Taschenwagen mit einer Tasche.

Der Autotransporter kann durch die daran angeordneten Greifkanten unmittelbar auf das Schienenfahrzeug, insbesondere in einen Taschenwagen, verbracht werden und gegebenenfalls zumindest teilweise in der Tasche des Taschenwagens angeordnet werden.

Eine Höhe der Anordnung der Greifkanten am Rahmen des Autotransporters kann so gewählt werden, dass diese bei einem in der Tasche angeordneten Autotransporter oberhalb dem Niveau der Oberkante der Tasche gelegen sind.

Vorzugsweise kann ein Teil der Ladefläche, insbesondere zumindest ein Teil der Abstützung, durch den in der zweiten Position der Abstützung vergrößerten nutzbaren Raum unterhalb der Abstützung außerhalb der Tasche anordenbar sein über die Tasche hinaus ragen. Dadurch kann auf dem Autotransporter geladenes Ladegut in Längserstreckung der Tasche teilweise außerhalb der Tasche anordenbar sein.

Eine Fixierung eines in eine Tasche verladenen Autotransporters kann über einen höhenverstellbaren Stützbock am Taschenwagen zur Verriegelung eines Königszapfens des Autotransporters erfolgen.

Ausführungsbeispiele der Erfindung werden anhand der Figuren diskutiert. Es zeigen:
- Fig. 1 und 2: zeigen eine erste Ausführung eines mit Fahrzeugen beladenen Autotransporters,
- Fig. 3 und 4: zeigen eine zweite Ausführung eines mit Fahrzeugen beladenen Autotransporters,
- Fig. 5: eine Anordnung aus einem Autotransporter gemäß der Ausführung der Figuren 3 und 4 und einem Schienenfahrzeug in Form eines Taschenwagens mit einer Tasche,
- Fig. 6: Detailansichten einer Abstützung eines in eine Tasche eines Schienenfahrzeugs in Form eines Taschenwagens eingesetzten, unbeladenen Autotransporters,
- Fig. 7: die Ansicht der Figur 6 mit beladener Abstützung
- Fig. 8: eine weitere Detailansicht gemäß der Figur 6,
- Fig. 9: eine Seitenansicht gemäß der Figur 6,
- Fig. 10: eine perspektivische Anordnung gemäß der Figur 5, und
- Fig. 11: eine Seitenansicht eines unbeladenen Autotransporters gemäß der Ausführung der Figuren 3 und 4.

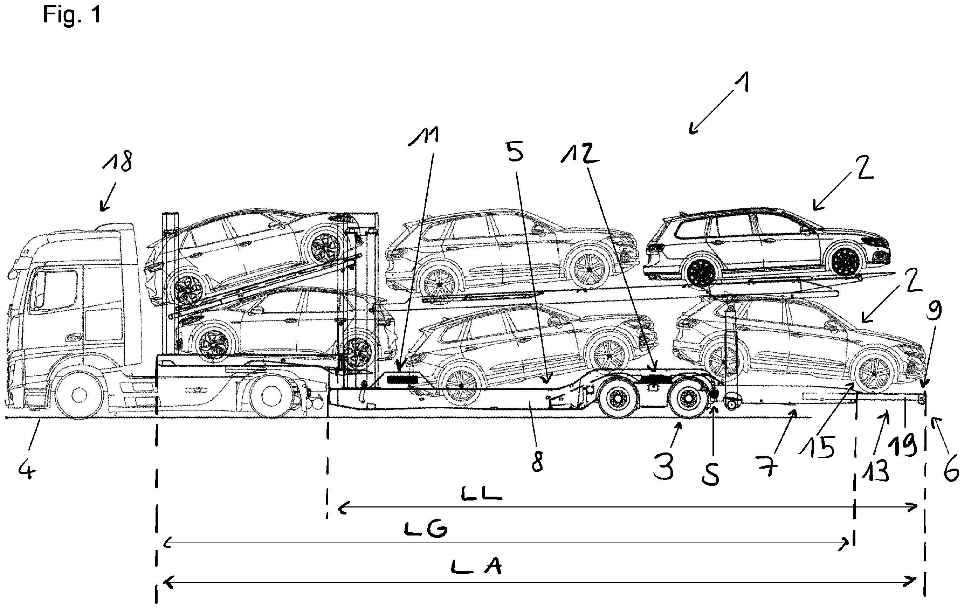

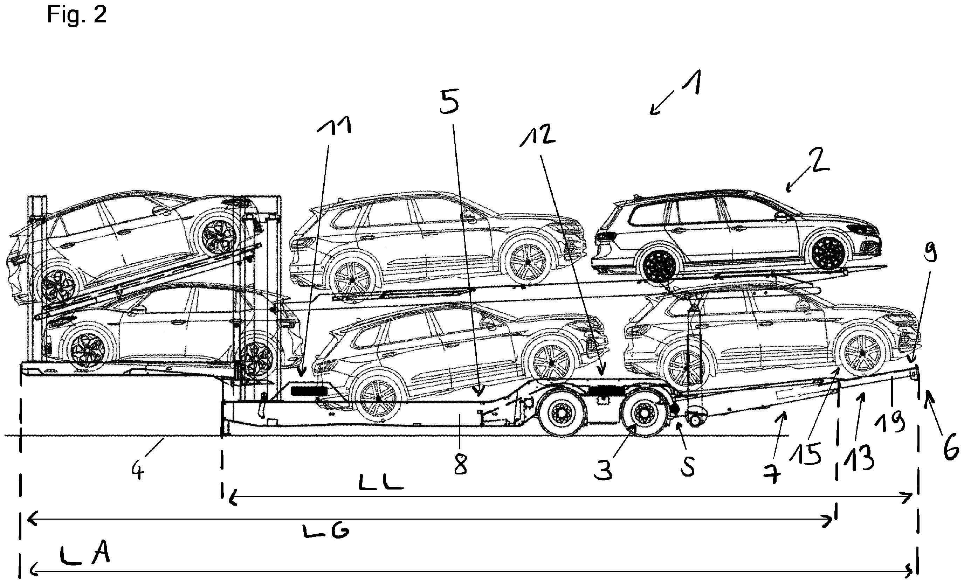

Die Figuren 1 und 2 zeigen eine erste Ausführung eines mit Fahrzeugen 2 beladenen Autotransporters 1 mit einem Fahrwerk mit zumindest einer Achse 3 mit Rädern zum unmittelbaren Befahren einer Fahrbahn 4 auf, wobei der Autotransporter 1 an eine Zugmaschine 18 angekoppelt ist. Der Autotransporter 1 ist in der gezeigten Ausführung mehrstöckige ausgebildet und weist gesamt eine Längserstreckung LA auf. Eine maximal zulässige Grundlänge LG des Autotransporters 1 kann ohne Ladung beispielsweise bis zu 16,5 Meter betragen. Mit einem Ladeüberhang von bis zu 1,5 Metern kann eine maximal zulässige gesamte Längserstreckung LA eines beladenen Autotransporters 1 beispielsweise bis zu 18 Meter betragen.

Der Autotransporter 1 weist neben einer oberen Ladefläche und hinter dem Führerhaus der Zugmaschine 18 angeordneten Ladeflächen eine untere Ladefläche 5 auf, welche eine Längserstreckung LL aufweist. Die Ladefläche 5 weist an einem heckseitigen Ende 6 des Autotransporters 1 eine Abstützung 7 auf, die um eine horizontale Schwenkachse S am Rahmen 8 des Autotransporters 1 schwenkbar gelagert ist und die relativ zum Rahmen 8 zwischen zumindest einer ersten und einer zweiten Position bewegbar ist. Ein Bewegen der Abstützung 7 zwischen der ersten und der zweiten Position kann in einem entsprechenden Verfahrensschritt erfolgen.

Ein heckseitiges Ende 9 der Abstützung 7 ist in einer Längsrichtung des Autotransporters 1 hinter der Achse 3 angeordnet. In der gezeigten Ausführung ist auch die Schwenkachse S in einer Längsrichtung des Autotransporters 1 hinter der Achse 3 angeordnet. In der gezeigten Ausführung bildet das heckseitige Ende 9 der Abstützung 7 das heckseitige Ende 6 des Autotransporters 1 aus.

In Figur 1 befindet sich die Abstützung 7 in der der ersten Position, die zum Beladen der Abstützung 7 geeignet ist. In einem entsprechenden Verfahrensschritt kann ein Beladen der Abstützung 7 mit zumindest einem Fahrzeug beispielsweise durch Auffahren über eine nicht dargestellte Auffahrrampe erfolgen.

Zumindest eine Achse 15 eines Fahrzeugs 2 ist auf der Abstützung 7 abgestellt.

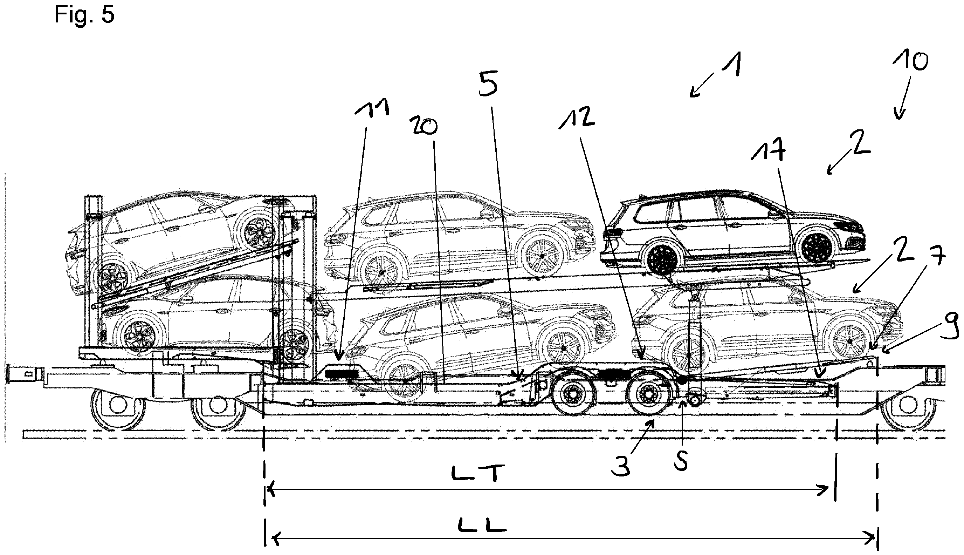

In der Figur 2 befindet sich die Abstützung 7 in der zweiten Position, die sich zum Transport auf dem Schienenfahrzeug 10 (siehe beispielsweise Figur 5) eignet. Die Abstützung 7 kann wie dargestellt in der zweiten Position relativ zum Rahmen 8 durch Hochschwenken um die Schwenkachse S angehoben sein und heckseitig unterhalb der Abstützung 7 einen vergrößerten nutzbaren Raum aufweisen, wodurch beim Verladen eine Kollision mit auf einem Schienenfahrzeug 10 vorhandenen Störkonturen vermeidbar ist.

Der Autotransporter weist 1 zum unmittelbaren Verladen des Autotransporters 1 auf ein Schienenfahrzeug 10 am Rahmen 8 des Autotransporters in Form von Ausnehmungen ausgeführte Greifkanten 11, 12 für eine Hubvorrichtung auf.

In der gezeigten Ausführung ist die Abstützung 7 durch einen ausfahrbaren Teilbereich 13 längenveränderbar ausgebildet, wodurch sich die Längserstreckung LL der Ladefläche 5 vergrößern lässt. Dadurch kann sich beispielsweise ein zulässiger Ladeüberhang nutzen lassen. In der gezeigten Ausführung ist der ausfahrbare Teilbereich 13 in Form einer Ausfahrrampe ausgebildet.

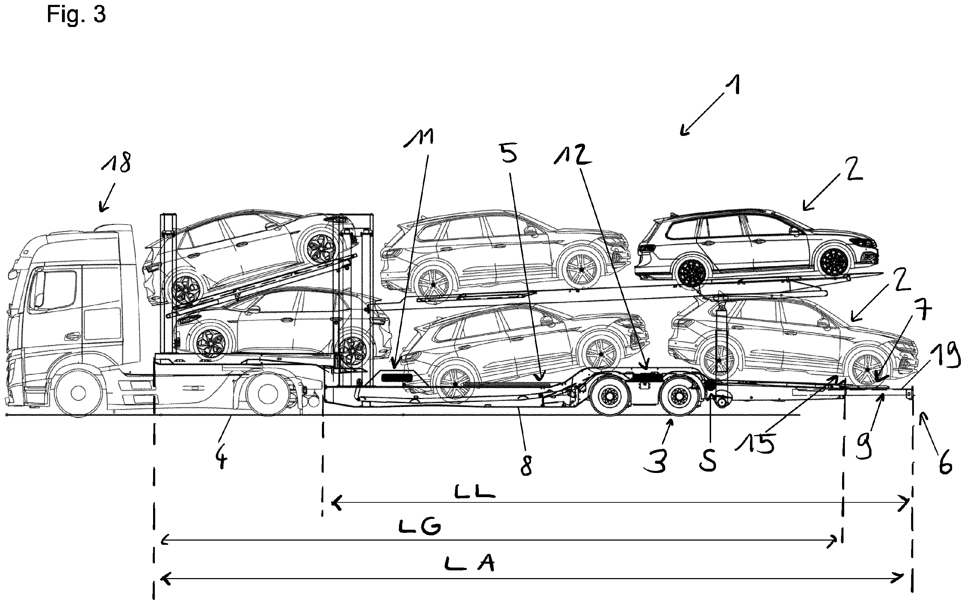

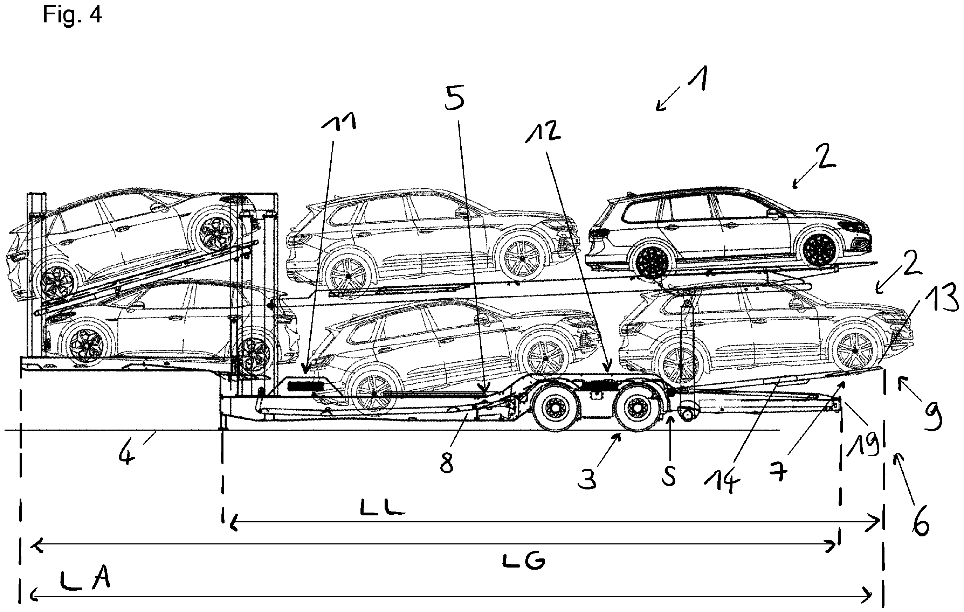

Die Figuren 3 und 4 zeigen eine zweite Ausführung eines mit Fahrzeugen 2 beladenen Autotransporters 1, wobei sich diese Ausführung zur in den Figuren 1 und 2 gezeigten ersten Ausführung durch die Ausgestaltung der am heckseitigen Ende 6 des Autotransporters 1 angeordneten Abstützung 7 unterscheidet. Die in den Figuren 3 und 4 gezeigten Stellungen der Abstützung 7 entsprechen im Wesentlichen jenen der in den Figuren 1 und 2 gezeigten Stellungen.

In dieser zweiten Ausführung ist die hochschwenkbare Abstützung 7 über einen längenveränderbaren Schwenkarm 14 am Rahmen 8 gelagert. Eine Achse 15 eines Fahrzeugs 2 ist auf der Abstützung 7 abgestellt.

In Figur 3 befinden sich die Abstützung 7 in der der ersten Position. Die aus dem Rahmen 8 ausfahrbare Ausfahrrampe 19 bildet das heckseitige Ende 6 des Autotransporters 1 aus. Eine Längserstreckung LL der Ladefläche 5 kann durch die Ausfahrrampe 19 verlängert sein. Die Ausfahrrampe 19 kann jedoch eine Störkontur darstellen, wodurch ein Verladen des Autotransporters 1 auf ein Schienenfahrzeug nicht uneingeschränkt möglich ist.

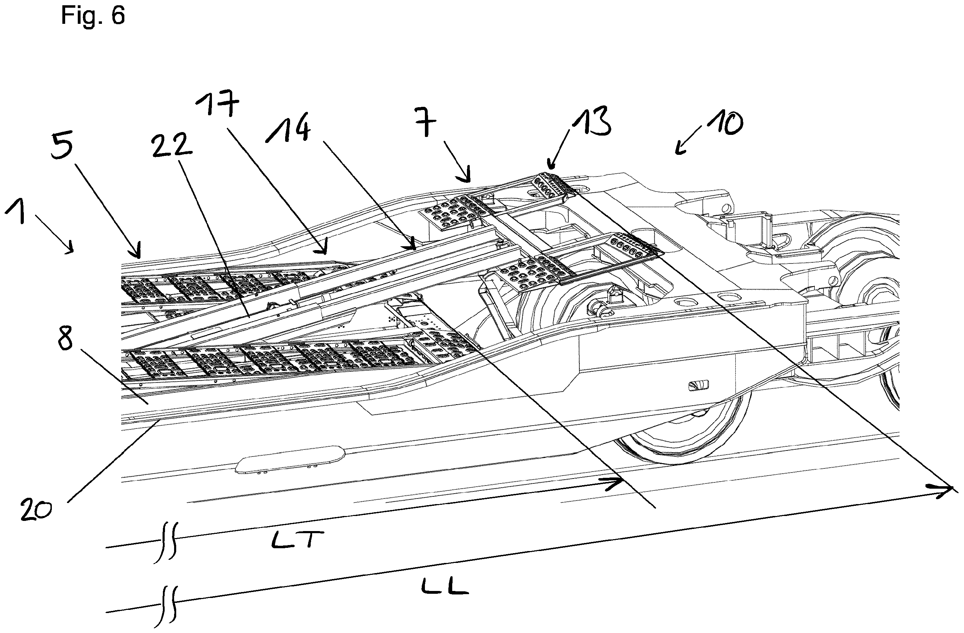

In der Figur 4 befindet sich die Abstützung 7 in der zweiten Position, die sich zum Transport auf dem Schienenfahrzeug 10 (siehe beispielsweise Figur 6) eignet. Die Abstützung 7 kann wie dargestellt in der zweiten Position relativ zum Rahmen 8 durch Hochschwenken des Schwenkarms 14 um die Schwenkachse S angehoben sein und heckseitig unterhalb der Abstützung 7 einen vergrößerten nutzbaren Raum aufweisen. Die Ausfahrrampe 19 am heckseitigen Ende 6 ist eingefahren worden, um den Raum unterhalb der Abstützung 7 freizuhalten. In dieser Position bildet das heckseitige Ende 9 der Abstützung 7 das heckseitige Ende 6 des Autotransporters 1 aus.

Figur 5 zeigt eine Anordnung aus einem Autotransporter 1 gemäß der Ausführung der Figuren 3 und 4 und einem Schienenfahrzeug 10 in Form eines Taschenwagens mit einer Tasche 17, welche eine Längserstreckung LT aufweist.

Der Autotransporter 1 ist in Längserstreckung und auch in Höhenerstreckung teilweise in der Tasche 17 angeordnet. Dabei ist ein Teil der Ladefläche 5, welche insgesamt eine größere Längserstreckung LL aufweist, innerhalb der Längserstreckung LT der Tasche 17 angeordnet. Der Autotransporter 1 kann in entsprechenden Verfahrensschritten durch eine an den Greifkanten 11, 12 des Autotransporters 1 angreifende Hubvorrichtung angehoben und auf das Schienenfahrzeug 10 abgesetzt worden sein.

Ein Teil der Ladefläche 5, insbesondere ein Teil der Abstützung 17, ist durch den in der zweiten Position der Abstützung 7 vergrößerten nutzbaren Raum unterhalb der Abstützung 7 außerhalb der Tasche 17 anordenbar und kann mit einem heckseitigen Ende 9 der Abstützung 7, welches auch das Heckseitige Ende des Autotransporters 1 ausbildet, über die Tasche 17 hinaus ragen. Dadurch kann auf dem Autotransporter 1 geladenes Ladegut beispielsweise in Form der Fahrzeuge 2 teilweise außerhalb der Tasche 17 anordenbar sein.

Eine Höhe der Anordnung der Greifkanten 11, 12 am Rahmen 8 des Autotransporters 1 kann so gewählt werden, dass diese bei einem in der Tasche 17 angeordneten Autotransporter 1 oberhalb dem Niveau der Oberkante 20 der Tasche 17 gelegen sind.

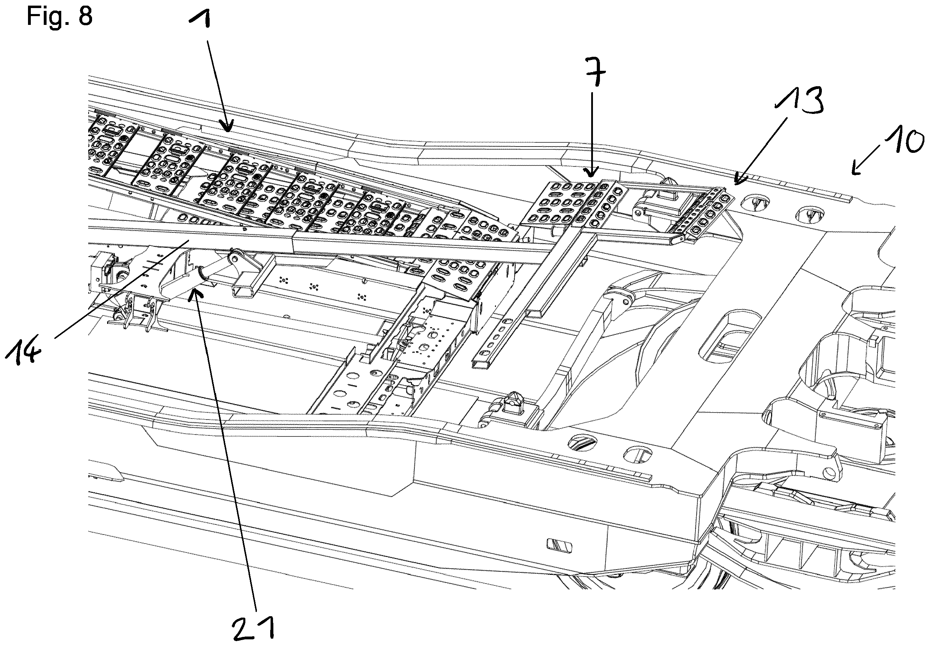

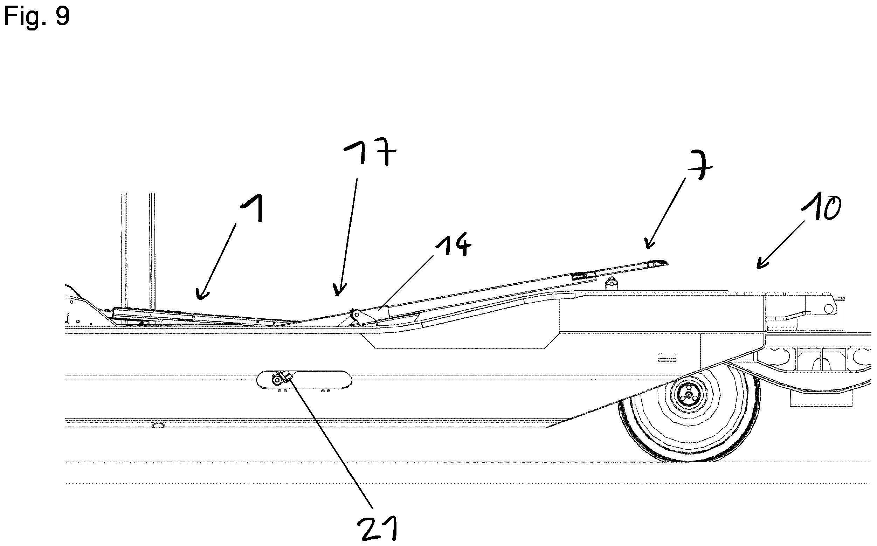

Die Figuren 6, 8 und 9 zeigen perspektivische Detailansichten eines in eine Tasche 17 eines als Taschenwagen ausgeführten Schienenfahrzeugs 10 eingesetzten, unbeladenen Autotransporters 1 gemäß der Ausführung der Figur 5. Dabei ist die hochschwenkbare Abstützung 7 erkennbar, die über einen längenveränderbaren Schwenkarm 14 am Rahmen 8 gelagert ist. Zum Verschwenken des Schwenkarms 14 ist in der gezeigten Ausführung und wie in den Figuren 8 und 9 erkennbar ein Antrieb 21 vorgesehen.

Die Abstützung 7 ist durch den ausfahrbaren Teilbereich 13 längenveränderbar ausgebildet. Eine Position der Abstützung 7 relativ zum Rahmen 8 kann durch den schwenkbaren und in dieser Ausführung längenveränderbaren Stützarm 14 einstellbar sein, wodurch effektiv auch eine längenveränderbare Ausführung der Abstützung 7 ausgebildet wird. Eine Längenveränderung des Stützarms 14 kann grundsätzlich händisch oder wie in der Ausführung der Figur 6 erkennbar durch einen Antrieb 22, hier beispielhaft in Form eines Hydraulikzylinders, erfolgen.

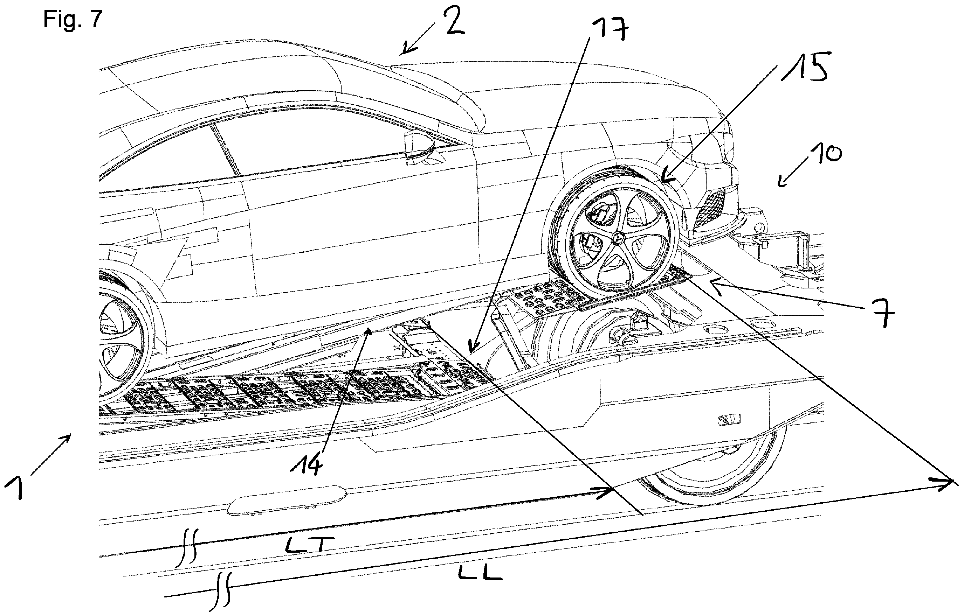

Figur 7 zeigt eine zu den Figuren 6, 8 und 9 analoge Ansicht eines in eine Tasche 17 eingesetzten Autotransporters 1, wobei eine Achse 15 eines Fahrzeugs 2 auf der Abstützung 7 abgestellt ist.

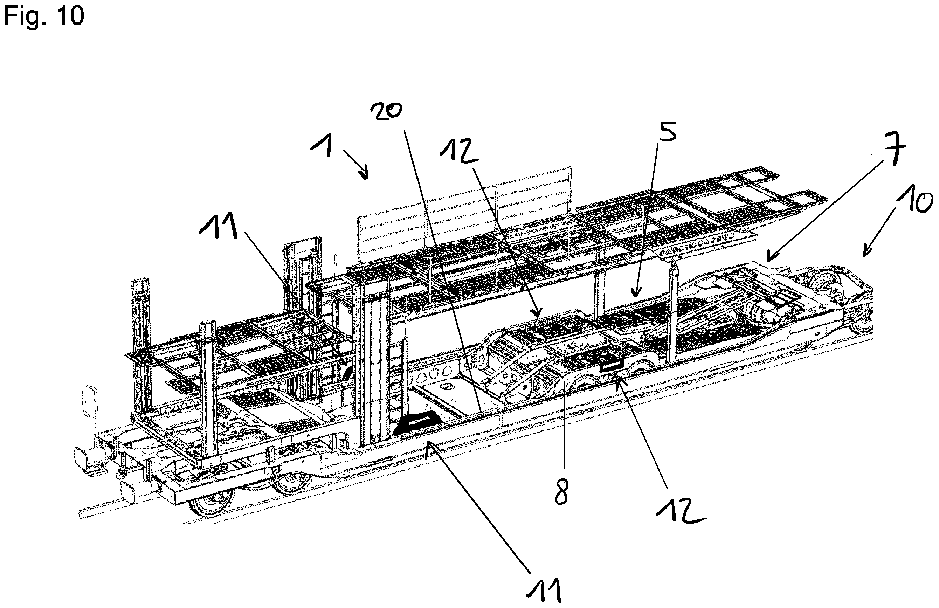

Figur 10 zeigt eine perspektivische Ansicht eines in eine Tasche 17 eines als Taschenwagen ausgeführten Schienenfahrzeugs 10 eingesetzten, unbeladenen Autotransporters 1 gemäß der Ausführung der Figur 5.

Auch hier ist erkennbar, dass eine Höhe der Anordnung der Greifkanten 11, 12 am Rahmen 8 des Autotransporters 1 so wählbar ist, dass diese bei einem in der Tasche 17 angeordneten Autotransporter 1 oberhalb dem Niveau der Oberkante der Tasche 17 gelegen sind.

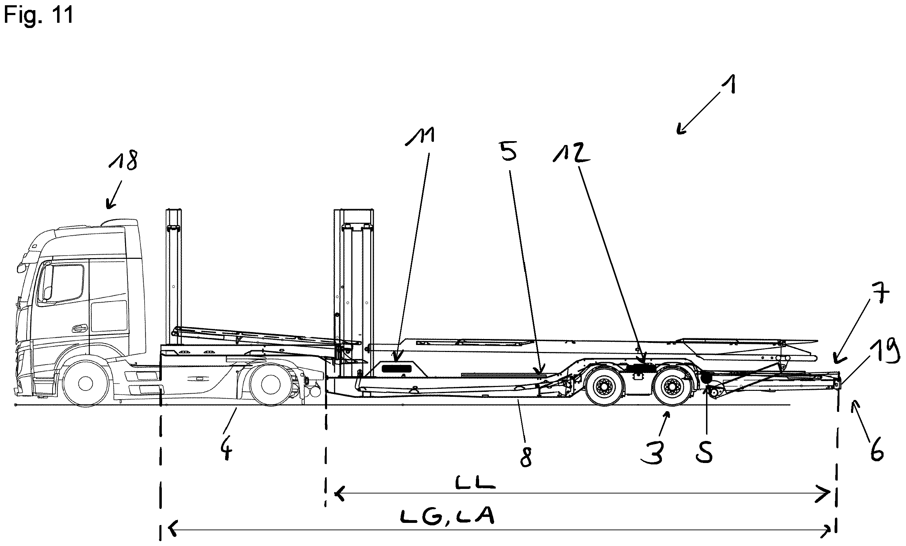

Figur 11 zeigt eine Seitenansicht eines unbeladenen Autotransporters 1 gemäß der Ausführung der Figuren 3 und 4. Die obere Ladefläche und die hinter dem Führerhaus der Zugmaschine 18 angeordneten Ladeflächen befinden sich in einem abgesenkten Zustand, wie er etwa für den Leertransport auf der Straße vorgeschrieben sein kann.

Durch ein Einfahren der Ausfahrrampe 19 und eine entsprechende Positionierung der Abstützung 7 weist der Autotransporter eine im Wesentlichen minimale Längserstreckung LA auf, welche hier der Grundlänge LG des Autotransporters 1 entspricht. Dabei ist die Längserstreckung LL der unteren Ladefläche 5 im Wesentlichen vollständig innerhalb der Grundlänge LG des Autotransporters 1 gelegen.

In einer solchen Konfiguration des Autotransporters 1, welche beispielsweise auch für einen Leertransport auf einem Schienenfahrzeug 10 in Form eines Taschenwagens mit einer Tasche 17 geeignet ist, kann die Ladefläche 5 mit der gesamten Längserstreckung LL innerhalb der Längserstreckung LT der Tasche 17 anordenbar sein.

### Bezugszeichenliste:

- 1: Autotransporter
- 2: Fahrzeug
- 3: Achse Autotransporter
- 4: Fahrbahn
- 5: Ladefläche
- 6: heckseitigen Ende Autotransporter
- 7: Abstützung
- 8: Rahmen Autotransporter
- 9: heckseitiges Ende Abstützung
- 10: Schienenfahrzeug
- 11: Greifkanten
- 12: Greifkanten
- 13: Teilbereich Abstützung
- 14: Schwenkarm
- 15: Achse Fahrzeug
- 17: Tasche Taschenwagen
- 18: Zugmaschine
- 19: Ausfahrrampe
- 20: Oberkante Tasche
- 21: Antrieb Schwenkarm
- 22: Antrieb Schwenkarm

- S: Schwenkachse
- LA: Längserstreckung Autotransporter
- LG: Grundlänge Autotransporter
- LL: Längserstreckung Ladefläche

## Patentansprüche

1. Autotransporter (1) zum Transport von Fahrzeugen (2), mit
- einem Fahrwerk mit zumindest einer Achse (3) mit Rädern zum unmittelbaren Befahren einer Fahrbahn (4) und
- zumindest einer Ladefläche (5) zum Beladen mit zumindest einem Fahrzeug (2),
wobei die zumindest eine Ladefläche (5) an einem heckseitigen Ende (6) des Autotransporters (1) eine Abstützung (7) aufweist, die relativ zu einem Rahmen (8) des Autotransporters (1) zwischen zumindest einer ersten und einer zweiten Position bewegbar, insbesondere anhebbar, ist, wobei ein heckseitiges Ende (9) der Abstützung (7) in einer Längsrichtung des Autotransporters (1) in zumindest einer der Positionen hinter der Achse (3) angeordnet ist, **dadurch gekennzeichnet, dass** der Autotransporter (1) zum Verladen des Autotransporters (1) auf ein Schienenfahrzeug (10) Greifkanten (11) für eine Hubvorrichtung aufweist, wobei der Autotransporter (1) zumindest ein Paar an Greifkanten (11) für die Hubvorrichtung aufweist und die Greifkanten (11) am Rahmen (8) des Autotransporters (1) angeordnet sind.

2. Autotransporter nach einem der vorangehenden Ansprüche, wobei der Autotransporter (1) zumindest zwei Paare an Greifkanten (11, 12) für die Hubvorrichtung aufweist und zumindest zwei Paare an Greifkanten (11, 12) in einer Längsrichtung des Autotransporters (1) im Wesentlichen zentral um die Mitte der Grundlänge (LG) des Autotransporters am Rahmen (8) des Autotransporters (1) angeordnet sind.

3. Autotransporter nach einem der vorangehenden Ansprüche, wobei die Abstützung (7) relativ zum Rahmen (8) zwischen zumindest einer ersten und einer zweiten Position verschwenkbar und/oder in einer Höhenposition versetzbar ist.

4. Autotransporter nach einem der vorangehenden Ansprüche, wobei sich die Abstützung (7) in der ersten Position zum Beladen der Abstützung (7) eignet und/oder die Abstützung (7) in der zweiten Position heckseitig unterhalb der Abstützung (7) einen vergrößerten nutzbaren Raum aufweist.

5. Autotransporter nach einem der vorangehenden Ansprüche, wobei die Abstützung (7) längenveränderbar, insbesondere durch zumindest einen ausklappbaren und/oder ausfahrbaren Teilbereich (13), ausgebildet ist.

6. Verfahren zum Verladen eines Autotransporters (1) nach einem der vorangehenden Ansprüche auf ein Schienenfahrzeug (10), insbesondere auf einen Taschenwagen, wobei das Verfahren zumindest die folgenden Verfahrensschritte umfasst:
- Bereitstellen eines Autotransporters (1) auf einer Fahrbahn (4) durch unmittelbares Befahren mittels eines Fahrwerks des Autotransporters (1) mit zumindest einer Achse (3) mit Rädern
- gegebenenfalls Beladen zumindest einer Ladefläche (5) des Autotransporters (1) mit zumindest einem Fahrzeug (2), wobei zumindest eine Achse (15) eines Fahrzeugs (2) auf einer an einem heckseitigen Ende (6) des Autotransporters (1) angeordneten, relativ zu einem Rahmen (8) des Autotransporters (1) zwischen zumindest einer ersten und einer zweiten Position bewegbaren, insbesondere anhebbaren, Abstützung (7) abgestellt wird, wobei sich die Abstützung (7) in der ersten Position, die zum Beladen der Abstützung (7) geeignet ist, befindet
- gegebenenfalls Bewegen, insbesondere Anheben, der Abstützung (7) von der ersten in die zweite Position, die sich zum Transport auf dem Schienenfahrzeug (10) eignet
- Anheben und Verbringen des - ggf. beladenen - Autotransporters (1) mit einer Hubvorrichtung über das Schienenfahrzeug (10), wobei die Hubvorrichtung für den Hebevorgang in oder an den Greifkanten (11, 12) des Autotransporters (1) angreift
- Absetzen des Autotransporters (1) auf das Schienenfahrzeug (10)

7. Verfahren zum Verladen eines Autotransporters (1) auf ein Schienenfahrzeug (10) nach dem vorangehenden Anspruch, wobei das Schienenfahrzeug (10) in Form eines Taschenwagens mit einer Tasche (17) ausgebildet ist, wobei beim Absetzen des Autotransporters (1) auf das Schienenfahrzeug (10) ein zumindest teilweises Einsetzen des Autotransporters (10), insbesondere ein zumindest teilweises Einsetzen der Ladefläche (5), in eine Tasche (17) des Schienenfahrzeugs (10) erfolgt.

8. Verfahren zum Verladen eines Autotransporters (1) auf ein Schienenfahrzeug (10) nach einem der beiden vorangehenden Ansprüche, wobei ein Bewegen, insbesondere Anheben, der Abstützung (7) von der ersten in die zweite Position, die sich zum Transport auf dem Schienenfahrzeug (10) eignet, durch ein Absetzten des Autotransporters (1) auf das Schienenfahrzeug (10) erfolgt, wenn dies nicht vor dem Absetzten erfolgt ist.

9. Anordnung aus einem Autotransporter (1) zum Transport von Fahrzeugen (2) nach einem der Ansprüche 1 bis 5 und einem Schienenfahrzeug (10).

10. Anordnung nach dem vorangehenden Anspruch, wobei das Schienenfahrzeug (10) in Form eines Taschenwagens mit einer Tasche (17) ausgebildet ist und der Autotransporter (1) zumindest teilweise in der Tasche (17) angeordnet ist.

11. Anordnung nach dem vorangehenden Anspruch, wobei die Tasche (17) eine Längserstreckung (LT) aufweist und zumindest ein Teil der am heckseitigen Ende (6) des Autotransporters (1) angeordneten Abstützung (7) über eine Längserstreckung (LT) der Tasche (17) hinaus ragt.

## Claims

1. A car transporter (1) for transporting vehicles (2), with
- a running gear with at least one axle (3) with wheels for direct travel on a roadway (4) and
- at least one loading area (5) for loading with at least one vehicle (2),
wherein the at least one loading area (5) has a support (7) at a rear end (6) of the car transporter (1), which support is movable, in particular liftable, relative to a frame (8) of the car transporter (1) between at least a first and a second position, wherein a rear end (9) of the support (7) is arranged in a longitudinal direction of the car transporter (1) in at least one of the positions behind the axle (3), **characterized in that** the car transporter (1) has gripping edges (11) for a lifting device for loading the car transporter (1) onto a rail vehicle (10), wherein the car transporter (1) has at least one pair of gripping edges (11) for the lifting device and the gripping edges (11) are arranged on the frame (8) of the car transporter (1).

2. The car transporter according to one of the preceding claims, wherein the car transporter (1) has at least two pairs of gripping edges (11, 12) for the lifting device and at least two pairs of gripping edges (11, 12) are arranged in a longitudinal direction of the car transporter (1) substantially centrally around the middle of the basic length (LG) of the car transporter on the frame (8) of the car transporter (1).

3. The car transporter according to one of the preceding claims, wherein the support (7) is pivotable relative to the frame (8) between at least a first and a second position and/or is displaceable in a height position.

4. The car transporter according to one of the preceding claims, wherein the support (7) in the first position is suitable for loading the support (7) and/or the support (7) in the second position has an enlarged usable space at the rear below the support (7).

5. The car transporter according to one of the preceding claims, wherein the support (7) is designed to be variable in length, in particular by means of at least one fold-out and/or extendable partial region (13).

6. A method for loading a car transporter (1) according to one of the preceding claims onto a rail vehicle (10), in particular onto a pocket wagon, wherein the method comprises at least the following steps:
- providing a car transporter (1) on a roadway (4) by directly driving on it using a running gear of the car transporter (1) with at least one axle (3) provided with wheels
- optionally loading at least one loading area (5) of the car transporter (1) with at least one vehicle (2), wherein at least one axle (15) of a vehicle (2) is placed on a support (7) arranged at a rear end (6) of the car transporter (1) and movable, in particular liftable, relative to a frame (8) of the car transporter (1) between at least a first and a second position, wherein the support (7) is in the first position, which is suitable for loading the support (7)
- optionally moving, in particular lifting, the support (7) from the first to the second position, which is suitable for transport on the rail vehicle (10)
- lifting and moving the - possibly loaded - car transporter (1) with a lifting device over the rail vehicle (10), wherein the lifting device for the lifting process engages in or on the gripping edges (11, 12) of the car transporter (1)
- placing the car transporter (1) on the rail vehicle (10)

7. The method for loading a car transporter (1) onto a rail vehicle (10) according to the preceding claim, wherein the rail vehicle (10) is designed in the form of a pocket wagon with a pocket (17), wherein when the car transporter (1) is placed onto the rail vehicle (10), an at least partial insertion of the car transporter (10), in particular an at least partial insertion of the loading area (5), into a pocket (17) of the rail vehicle (10) takes place.

8. The method for loading a car transporter (1) onto a rail vehicle (10) according to one of the two preceding claims, wherein a movement, in particular lifting, of the support (7) from the first into the second position, which is suitable for transport on the rail vehicle (10), takes place by placing the car transporter (1) onto the rail vehicle (10), if this has not taken place before the placing step.

9. An arrangement consisting of a car transporter (1) for transporting vehicles (2) according to one of claims 1 to 5 and a rail vehicle (10).

10. The arrangement according to the preceding claim, wherein the rail vehicle (10) is designed in the form of a pocket wagon with a pocket (17) and the car transporter (1) is at least partially arranged in the pocket (17).

11. The arrangement according to the preceding claim, wherein the pocket (17) has a longitudinal extension (LT) and wherein at least a part of the support (7) arranged at the rear end (6) of the car transporter (1) projects beyond a longitudinal extension (LT) of the pocket (17).

## Revendications

1. Transporteur de voitures (1) destiné à transporter des véhicules (2), avec
- un train de roulement avec au moins un essieu (3) avec des roues, destiné à circuler directement sur une chaussée (4), et
- au moins une surface de chargement (5) destinée à être chargée avec au moins un véhicule (2),
dans lequel l'au moins une surface de chargement (5) présente, sur une extrémité arrière (6) du transporteur de voitures (1), un appui (7), qui peut être déplacé, en particulier soulevé, entre au moins une première et une deuxième position par rapport à un châssis (8) du transporteur de voitures (1), dans lequel une extrémité côté arrière (9) de l'appui (7) est disposée derrière l'essieu (3) dans au moins une des positions dans un sens longitudinal du transporteur de voitures (1), **caractérisé en ce que** le transporteur de voitures (1) présente des bords de préhension (11) pour un dispositif de levage pour charger le transporteur de voitures (1) sur un véhicule sur rails (10), dans lequel le transporteur de voitures (1) présente au moins une paire de bords de préhension (11) pour le dispositif de levage et les bords de préhension (11) sont disposés sur le châssis (8) du transporteur de voitures (1).

2. Transporteur de voitures selon l'une quelconque des revendications précédentes, dans lequel le transporteur de voitures (1) présente au moins deux paires de bords de préhension (11, 12) pour le dispositif de levage et au moins deux paires de bords de préhension (11, 12) sont disposées sur le châssis (8) du transporteur de voitures (1) sensiblement au centre autour du milieu de la longueur de base (LG) du transporteur de voitures.

3. Transporteur de voitures selon l'une quelconque des revendications précédentes, dans lequel l'appui (7) peut être pivoté entre au moins une première et une deuxième position et/ou peut être amené dans une position en hauteur par rapport au châssis (8).

4. Transporteur de voitures selon l'une quelconque des revendications précédentes, dans lequel l'appui (7) s'adapte dans la première position pour charger l'appui (7) et/ou l'appui (7) présente, côté arrière dans la deuxième position, sous l'appui (7), un espace utilisable agrandi.

5. Transporteur de voitures selon l'une quelconque des revendications précédentes, dans lequel l'appui (7) est réalisé de manière variable en longueur, en particulier par au moins une zone partielle (13) dépliable et/ou extensible.

6. Procédé destiné à charger un transporteur de voitures (1) selon l'une quelconque des revendications précédentes, sur un véhicule sur rails (10), en particulier sur un wagon poche, dans lequel le procédé comprend au moins les étapes de procédé suivantes :
- de fourniture d'un transporteur de voitures (1) sur une chaussée (4) par circulation directe au moyen d'un train de roulement du transporteur de voitures (1) avec au moins un essieu (3) avec des roues,
- éventuellement de chargement d'au moins une surface de chargement (5) du transporteur de voitures (1) avec au moins un véhicule (2), dans lequel au moins un essieu (15) d'un véhicule (2) est placé sur un appui (7) pouvant être déplacé, en particulier soulevé, entre au moins une première et une deuxième position par rapport à un châssis (8) du transporteur de voitures (1), disposé sur une extrémité côté arrière (6) du transporteur de voitures (1), dans lequel l'appui (7) se trouve dans la première position, qui est adaptée pour charger l'appui (7),
- éventuellement de déplacement, en particulier de soulèvement, de l'appui (7) de la première dans la deuxième position, qui s'adapte au transport sur le véhicule sur rails (10),
- de soulèvement et d'amenée du transporteur de voitures (1) - éventuellement chargé - avec un dispositif de levage au-dessus du véhicule sur rails (10), dans lequel le dispositif de levage s'engage pour l'opération de levage dans ou sur les bords de préhension (11, 12) du transporteur de voitures (1),
- de dépôt du transporteur de voitures (1) sur le véhicule sur rails (10).

7. Procédé destiné à charger un transporteur de voitures (1) sur un véhicule sur rails (10) selon la revendication précédente, dans lequel le véhicule sur rails (10) est réalisé sous la forme d'un wagon poche avec une poche (17), dans lequel une insertion au moins partielle du transporteur de voitures (1), en particulier une insertion au moins partielle de la surface de chargement (5), dans une poche (17) du véhicule sur rails (10) est effectuée lors du dépôt du transporteur de voitures (1) sur le véhicule sur rails (10).

8. Procédé destiné à charger un transporteur de voitures (1) sur un véhicule sur rails (10) selon l'une quelconque des deux revendications précédentes, dans lequel un déplacement, en particulier un soulèvement, de l'appui (7) de la première dans la deuxième position, qui s'adapte au transport sur le véhicule sur rails (10), est effectué par un dépôt du transporteur de voitures (1) sur le véhicule sur rails (10) lorsque ceci n'est pas effectué avant le dépôt.

9. Ensemble composé d'un transporteur de voitures (1) destiné au transport de véhicules (2) selon l'une quelconque des revendications 1 à 5 et d'un véhicule sur rails (10).

10. Ensemble selon la revendication précédente, dans lequel le véhicule sur rails (10) est réalisé sous la forme d'un wagon poche avec une poche (17) et le transporteur de voitures (1) est disposé au moins en partie dans la poche (17).

11. Ensemble selon la revendication précédente, dans lequel la poche (17) présente une extension longitudinale (LT) et au moins une partie de l'appui (7) disposé sur l'extrémité côté arrière (6) du transporteur de véhicules (1) dépasse d'une extension longitudinale (LT) de la poche (17).
